(19) Europäisches Patentamt
European Patent Office
Office européen des brevets

(11) Veröffentlichungsnummer: **0 061 073**
**B1**

# (12) EUROPÄISCHE PATENTSCHRIFT

(45) Veröffentlichungstag der Patentschrift: **03.07.85**

(51) Int. Cl.⁴: **C 04 B 20/10**, D 06 M 11/08

(21) Anmeldenummer: **82101926.2**

(22) Anmeldetag: **11.03.82**

(54) **Faserwerkstoff.**

(30) Priorität: **20.03.81 DE 3110864**

(43) Veröffentlichungstag der Anmeldung: **29.09.82 Patentblatt 82/39**

(45) Bekanntmachung des Hinweises auf die Patenterteilung: **03.07.85 Patentblatt 85/27**

(84) Benannte Vertragsstaaten: **AT BE CH FR GB IT LI NL SE**

(56) Entgegenhaltungen:
**DE - A - 3 002 484**
**DE - B - 2 607 339**
**DE - C - 720 512**
**DE - C - 803 703**

(73) Patentinhaber: **Herr, Alfons K., Ahornweg 3, D-7513 Stutensee 3 (DE)**

(72) Erfinder: **Herr, Alfons K., Ahornweg 3, D-7513 Stutensee 3 (DE)**

(74) Vertreter: **Trappenberg, Hans, Postfach 1909 Wendtstrasse 1, D-7500 Karlsruhe 21 (DE)**

**EP 0 061 073 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Herstellen eines insbesondere bei der Anwendung von im Bauwesen verwendeten anorganischen Bindemitteln, und zwar sowohl Luftbindemitteln, wie auch hydraulischen Bindemitteln als Verstärkungs- und/oder Versteifungswerkstoff einsetzbaren Faserwerkstoffs.

Ein derartiger Faserwerkstoff ist durch Asbest gegeben. Angesichts der Kanzerogenität der Asbestfasern ist es jedoch dringend geboten, ein Substitut für diese Faser zu entwickeln. Zu berücksichtigen hierbei ist allerdings, dass Asbest ganz bestimmte und für die Verwendung als Zusatz zu anorganischen Bindemitteln wertvolle und mit anderen Faserstoffen schwer erreichbare Eigenschaften aufweist. Da von einem Substitutsprodukt gleiche oder zumindest annähernd gleiche Eigenschaften gefordert werden müssen und dabei auch die Faserpreise eine bedeutende Rolle spielen, sind die Möglichkeiten zur Lösung dieser Aufgabe sehr eingeschränkt.

Verholzte pflanzliche Fasern, Holz- und Zellulosefasern sind die einzigen Rohstoffe, die uns nachwachsen und auf Sicht gesehen als Substitut zur Verfügung stehen. Diese Fasern sind auch von ihren elastomechanischen und physikalischen Eigenschaften her am ehesten geeignet, als Substitut für Asbestfasern verwendet zu werden.

An ein solches Substitut sind nach der Analyse der Asbestindustrie folgende technische Eigenschaftsforderungen zu stellen: «Wärmebeständigkeit, Geschmeidigkeit, Verspinnbarkeit, Unbrennbarkeit, Isoliervermögen, gute Einbindemöglichkeit in zahlreiche anorganische und organische Bindemittel, je nach Art und Sorte eine gewisse Beständigkeit.» Ausserdem wird von dem Ersatzstoff für Chrysotilasbest gefordert, dass er mit Zement abbindet. Bisherige Versuche mit Zellulose- und Glasfasern ergaben hier keine ausreichenden Festigkeiten.

Es stellt sich damit die Aufgabe, einen Faserwerkstoff beziehungsweise ein Verfahren zur Herstellung eines derartigen Faserwerkstoffes anzugeben, der als Werkstoff wie die Asbestfasern einsetzbar ist, also die angeführten Eigenschaften aufweist. Diese Aufgabe wird in erfindungsgemässer Weise gelöst durch ein Verfahren zur Herstellung eines derartigen Faserwerkstoffes, das gekennzeichnet ist durch die innige nasse Vermengung von organischen Fasern – pflanzliche oder tierische Fasern, wie auch organische Chemiefasern, insbesondere Fasern, die dem fasrigen Bestandteil von Klärschlämmen entstammen – mit Ausgangschemikalien, die unter der folgenden Zugabe von Phosphorsäure (Orthophosphorsäure) tertiäre Phosphate bilden, so dass die Fasern des sich so ergebenden Endprodukts von diesen tertiären Phosphaten umhüllt sind.

Im Gegensatz zu den mineralischen Asbestfasern, die die oben angeführten Eigenschaften als einzige Mineralfaser bereits aufweisen, werden nach der Erfindung organische Fasern verwendet, die selbstverständlich die einer Mineralfaser innewohnenden Eigenschaften nicht aufweisen können. Die organische Faser muss daher noch präpariert werden, um damit zu den Eigenschaften der Mineralfaser zu kommen. Dies geschieht in erfindungsgemässer Weise dadurch, dass an die Oberfläche dieser organischen Fasern tertiäre Phosphate angelagert werden, wobei diese Anlagerung so durchgeführt wird, dass die gesamte Faser von den Phosphaten umhüllt wird. Durch diese Umhüllung wird die den organischen Fasern innewohnende Elastizität praktisch nicht beeinträchtigt, ebensowenig wie ihre sonstigen physikalischen Eigenschaften. Die organischen Fasern bleiben also auch nach der Umhüllung geschmeidig und verspinnbar und weisen auch ein etwa gleichbleibendes Isoliervermögen auf. Durch die Anlagerung wird jedoch noch erreicht, dass sich diese Fasern in anorganische Bindemittel einbauen lassen und es wird insbesondere nicht nur eine Wärmebeständigkeit, sondern eine Unbrennbarkeit dieser Fasern erzielt. Zu erklären ist dies damit, dass bei Beginn der Wärmeeinwirkung, ab etwa 375 K, das in den Phosphaten enthaltene Wasser (Kristallwasser) verdampft und schon damit die organische Faser vor zu grosser Wärmeeinwirkung schützt. Der entscheidende Mechanismus für die Unbrennbarkeit der nach der Erfindung präparierten Fasern dürfte jedoch darin liegen, dass das Phosphat bei weiter ansteigender Temperatur schmilzt und die organische Faser mit einem dichten Überzug versieht, so dass die Faser lediglich noch pyrolisieren kann, wobei praktisch keine Festigkeitseinbusse stattfindet.

Damit ergibt sich jedoch eine Faser beziehungsweise ein Faserwerkstoff, der in der Praxis wie ein Werkstoff aus der mineralischen Asbestfaser eingesetzt werden kann, da er vergleichbare physikalische und elastomechanische Eigenschaften aufweist und darüber hinaus nicht nur selbst, wie Asbest, nicht brennbar ist, sondern durch die zur Umsetzung der Phosphate notwendige Energie, wie auch durch den Wasseraustritt zur Verminderung der Brandlast beiträgt.

Der Faserwerkstoff nach der Erfindung soll insbesondere als Verstärkungs- und/oder Versteifungswerkstoff bei der Anwendung von im Bauwesen verwendeten anorganischen Bindemitteln einsetzbar sein, muss sich also ohne weitere Massnahmen sowohl in Luftbindemittel wie auch in hydraulische Bindemittel einbauen lassen. Auch dies ist, wie Versuche gezeigt haben, mit dem Faserwerkstoff nach der Erfindung möglich, da die Phosphate nicht nur den Bindemechanismus dieser Bindebaustoffe nicht stören, sondern sich innig mit ihnen verbinden.

Wichtig ist selbstverständlich nicht nur die Verbindungsmöglichkeit der Phosphate mit den Bindemitteln, sondern auch diejenige mit den organischen Fasern. Die Anlagerung der Phosphate erfolgt nach der Erfindung in zwei Stufen, und zwar so, dass nicht direkt die Phosphate angelagert werden, sondern Metallhydroxide, Metallhydrogencarbonate oder Metallcarbonate, die sodann durch Zufügen von Phosphorsäure auf der Faser die Phosphate bilden. Die Metallhydroxide,

Metallhydrogencarbonate wie auch die Metallcarbonate verbinden sich, da sie durchweg basisch sind, sehr gut mit den leicht sauren organischen Fasern, haften also auf deren gesamten Oberfläche. Durch die Einwirkung der Phosphorsäure werden dann die tertiären Phosphate direkt oder indirekt gebildet, die wiederum basisch sind. Dadurch ist auch eine sichere Haftung der Phosphate an den organischen Fasern gegeben.

Als organische Fasern können jede nur denkbaren pflanzlichen Fasern verwendet werden, ebenso wie auch tierische Fasern oder organische Chemiefasern, beispielsweise Azetatfasern oder regenerierte Cellulose. Aus wirtschaftlichen Gründen empfiehlt es sich jedoch, als Fasern Holz- und/oder Zellulosefasern zu verwenden, insbesondere Fasern, die aus den faserigen Bestandteilen von Klärschlämmen, und hier wiederum aus Klärschlämmen von Papierfabriken, entstammen. Aus dem gleichen Grund wird nach der Erfindung weiterhin vorgeschlagen, dass die Phosphate die Salze von Phosphorsäure (Orthophosphorsäure) und insbesondere der Metallhydroxide von Kalcium ($Ca(OH)_2$), Magnesium ($Mg(OH)_2$) und Aluminium ($Al(OH)_3$) sind. Diese Verbindungen sind ausserdem nicht nur in grossen Mengen vorhanden und damit preiswert, sondern sie sind auch einfach manipulierbar und ungiftig.

Durch die nasse Vermengung mit den Ausgangschemikalien werden die einzelnen Fasern nicht nur vollkommen umhüllt, sondern auch noch bewirkt, dass die Fasern durch Hydratation genügend feucht und auch geschmeidig sind. Ausserdem ergeben sich hierbei weitere Bindungskräfte in Form von Wasserstoffbrücken zwischen den Fasern, dem Wasser und den Hydroxiden, Hydrogencarbonaten beziehungsweise Carbonaten. Untersuchungen haben auch tatsächlich ergeben, dass die Fasern vollkommen von den Ausgangschemikalien umhüllt sind, so dass sich nach der nachfolgenden Zugabe der Phosphorsäure auch eine nahezu ununterbrochene Hülle von Phosphat um die einzelnen Fasern ergibt. Dies wiederum lässt auch den Schluss zu, dass die einzelne Faser im Brandfalle an ihrer Oberfläche praktisch vollkommen von einem glasartigen (keramischen) Mantel umhüllt ist, so dass kein Sauerstoff zutreten und die Faser damit nicht verbrennen kann.

Die nasse Vermengung kann so geschehen, dass die Fasern in einem entsprechenden Mischer mit Wasser zu einem Brei vermengt werden, dem sodann die pulverförmigen Ausgangschemikalien zugefügt werden. Statt Wasser hinzuzufügen, können auch die Fasern mit den pulverförmigen Ausgangschemikalien gemischt und sodann die Phosphorsäure, die dann zweckmässigerweise in niedriger Konzentration vorliegen sollte, zugedüst werden. Auch in diesem Falle ergibt sich ein Gemenge, bei dem sich die einzelnen Fasern vollkommen mit diesen Ausgangschemikalien, die nun gleichzeitig zu Phosphaten umgesetzt werden, umhüllen. In vielen Fällen liegen jedoch die Fasern bereits im feuchten Zustand vor, so insbesondere, wenn sie aus den fasrigen Bestandteilen von Klärschlämmen stammen. In diesem Falle muss, je nach der Feuchte der Faser, kein weiteres Wasser mehr zugegeben werden. Die Verwendungsmöglichkeit dieser faserigen Restbestandteile von Klärschlämmen ergibt einen weiteren Aspekt der Erfindung, da diese in den Klärschlämmen mitgeführten Feststoffe nunmehr einer sinnvollen Verwertung zugeführt werden können. Empfehlenswert zu verwenden sind nach der Erfindung hierbei die Restbestandteile von Klärschlämmen aus Papierfabriken, da diese Klärschlämme nicht nur die erwünschten Fasern als Abfallprodukt mit sich führen, sondern da diese Fasern auch noch mit zusätzlichen, die Verglasung fördernden Mineralien behaftet sind.

Eingangs wurde schon erwähnt, dass verholzte pflanzliche Fasern, Holz- und Zellulosefasern, wohl die einzigen Rohstoffe sind, die in genügender Menge zur Verfügung stehen. In ausreichender Menge steht ebenfalls Kalk (Kalcium) zur Verfügung, insbesondere in den Mineralien Kalkstein, Kreide, Marmor, Dolomitgips, Phosphorit, Apatit und Fluorit. Holz- und Zellstoffasern sowie Kalk dürften daher die wichtigsten Ausgangsrohstoffe zur Herstellung des erfindungsgemässen Faserwerkstoffes sein. Es sollen daher auch diese beiden Ausgangswerkstoffe bei der Durchführung des erfindungsgemässen Verfahrens beziehungsweise bei der Herstellung des Faserwerkstoffes nach der Erfindung näher betrachtet werden.

Die Holzfasern kommen bei einer Feuchtigkeit von ca. 40 Gewichtsteilen zur Mischung mit Kalziumhydroxid ($Ca(OH)_2$) und Phosphorsäure $H_3PO_4$. Dabei reagieren 3 mol gelöschter Kalk und 2 mol Phosphorsäure zu 1 mol Kalziumphosphat und 6 mol Wasser.

$$3\,Ca(OH)_2) + 2\,H_3PO_4 \rightarrow Ca_3(PO)_2 \cdot 6\,H_2O$$

Der Mischvorgang ist exotherm. Der pH-Wert des Faserwerkstoffes beträgt danach etwa 12,0. Durch die Hydratation des Wassers werden die freien OH-Gruppen aktiviert und ausserdem durch die Hydratationswärme das Gemenge erwärmt. Dies führt zu einer guten Bindung des bei dem Misch- und Umsetzungsprozess entstehenden Kalziumphosphates auf der Holz- oder Zellstoffaser. Die nun mineralisierte Holzfaser, die in der Zusammensetzung dem Zement artverwandt geworden ist, geht eine Bindung mit Zement ein, wenn sie zur Bewehrung von Zementprodukten Anwendung findet. Die Vermischung zwischen dem erfindungsgemässen Faserwerkstoff und Zement ist besser und gleichmässiger als die Vermischung mit Asbestfasern. Das ist durch die Gegenüberstellung von Zementplatten mit Asbestfaserbewehrung und mit einer Bewehrung mit dem erfindungsgemässen Faserwerkstoff bewiesen. Die Wärmebeständigkeit des Faserwerkstoffes muss im Zusammenhang mit der Anwendung gesehen werden. Diese Eigenschaft wird durch die

guten wärmedämmenden Eigenschaften der Holzfaser in Verbindung mit der Mineralisierung und dem Brandschutz erreicht. Die Geschmeidigkeit und Verspinnbarkeit werden durch die Faserlänge, ihr Verhältnis zu ihrer Dichte und durch den Feinheitsgrad der Faser bestimmt. Sie ist variabel und über die Auswahl des Faserrohstoffs beeinflussbar.

Zur vergleichenden Prüfung verschiedener wichtiger physikalischer Eigenschaften wurden in gleicher Zusammensetzung und unter gleichen Verarbeitungsbedingungen Zementplatten einmal durch Bewehrung mit Asbestfasern und zum anderen unter Anwendung des erfindungsgemässen Faserwerkstoffes hergestellt.

| | |
|---|---|
| Plattengrösse | 400 × 400 mm,<br>Plattenstärke 17,0–19,05 mm |
| Zusammensetzung | 20 Gewichtsteile Faserstoff<br>80 Gewichtsteile Zement |

Die Aushärtezeit betrug bei beiden Plattentypen ca. 36 Stunden (ohne Abbindebeschleuniger) bei einer Raumtemperatur von 30–35 °C. Die Abbindung erfolgte ohne Druck.

Physikalische Eigenschaften

Die mit Asbest hergestellten Platten hatten ein spezifisches Gewicht von 850–900 kg/m$^3$, die mit dem erfindungsgemässen Faserwerkstoff hergestellten Platten ein solches von 900–950 kg/m$^3$.

Bei beiden Platten wurden die gleichen Biegefestigkeiten von 2,0 N/mm$^2$ gemessen. Die Scherfestigkeit betrug bei den mit Asbest hergestellten Platten 0,92 N/mm$^2$, bei den mit dem Faserwerkstoff nach der Erfindung hergestellten Platten 1,04 N/mm$^2$.

Die Dickequellung, die bei Verwendung von Asbest 0,5% in 2 Stunden und 0,88% in 24 Stunden betrug, war bei den mit dem erfindungsgemässen Faserwerkstoff hergestellten Faserplatten wesentlich verbessert. Sie betrug nach 2 und nach 24 Stunden maximal 0,25%. Auch die Wasseraufnahme war bei Verwendung von diesen Faserwerkstoffen verbessert. Sie betrug bei Verwendung von Asbest 80,5% in 2 Stunden und 85,1% in 24 Stunden, bei Verwendung der Faserwerkstoffe 55,1% in 2 Stunden und 58,7% in 24 Stunden.

Die physikalischen Werte stellen den Querschnitt aus jeweils 10 Probekörpern dar. Beide Plattenarten wurden hinsichtlich der Brennbarkeit in Anlehnung an DIN 4102 geprüft. Sie haben beide die Prüfung nach Klasse A 2 (nicht brennbar) bestanden.

Hinsichtlich der Wirtschaftlichkeit ist zu sagen, dass die erfindungsgemässen Faserwerkstoffe mindestens zu dem Preis von Chrysotilasbest, 7er Faser, also der preisgünstigsten Asbestfaser für die Verwendung bei Baustoffen herstellbar ist.

Wie bereits erwähnt, können vorteilhafterweise Faserstoffe von Restabwasserklärschlämmen von Papierfabriken Verwendung finden. Sie bestehen in der Hauptsache aus fein gemahlenen, schlanken und elastischen Zellstoffasern, denen für diese Verwendung wertvolle Rohstoffe wie Kaolin, Titandioxyd usw. anhaften. Die Verwendung dieses Faserrohstoffes bei der Herstellung des erfindungsgemässen Faserwerkstoffes für die Holzspanindustrie hat sich in jahrelangem industriellen Einsatz bereits bewährt. Aber auch die Verwendung von Zellstoffasern kann zur Herstellung bestimmter Endprodukte vorteilhaft sein. Für die Bauplattenindustrie hingegen ist die Verwendung eines Gemischs grober Holzspäne von Vorteil, um bei der Bewehrung in der Zementmischung hohe Biege- und Querzugsfestigkeiten (Scherfestigkeiten) und hohe Elastizitätsmodule zu erreichen.

Die Phosphorsäure wird in Konzentrationen von 10% bis 50% verwendet. Liegt sie in höheren Konzentrationen vor, so wird dem Faser-Chemikaliengemisch vor der Zugabe der Säure eine entsprechende Menge Wasser zugesetzt.

Die Verwendung von Faserwerkstoffen zu hydraulischen Bindemitteln als Verstärkungs- und/oder Versteifungswerkstoffen an sich, wie auch die Verwendung von imprägnierten Faserwerkstoffen ist, beispielsweise aus der DE-C-803 703, bekannt. Bekannt ist auch, für die Imprägnierung Phosphorverbindungen einzusetzen, wie dies beispielsweise die DE-C-720 512 lehrt. Ebenfalls ist es bekannt, diese Faserwerkstoffe zur Anwendung im Bauwesen aus organischen Fasern herzustellen, die mit einem Überzug aus einem unlöslichen Salz versehen sind. Dies ist der DE-A-3 002 484 zu entnehmen. Nicht bekannt ist jedoch die Durchführung des angegebenen Verfahrens nach der Erfindung, das es gestattet, auf wirtschaftliche Art und Weise einen Faserwerkstoff herzustellen, der nicht nur als Verstärkungs- und/oder Versteifungswerkstoff dient, sondern gleichzeitig einen äusserst effektiven Brandschutz bildet.

Das Verfahren zur Herstellung des erfindungsgemässen Faserwerkstoffes als Substitut für Asbest wird in nachfolgenden Beispielen beschrieben. Die mengenmässige Zusammensetzung der einzelnen Komponenten ist variabel, wobei das stöchiometrische Mengenverhältnis eingehalten werden sollte. Lediglich zur Erreichung eines abweichenden pH-Wertes sind Abweichungen angezeigt. Ein abweichender pH-Wert kann bei bestimmten Anwendungen von Vorteil sein. Zur Verwendung als Bewehrungsmaterial in Zementbauplatten wird ein pH-Wert von etwa 12,0 eingestellt.

Der Faserwerkstoff nach der Erfindung kann, da er die damit versehenen Platten beziehungsweise Gegenstände im Brandfalle schützt und versteift, auch als Brandschutzfaser bezeichnet werden. In den nachfolgenden Beispielen ist diese Bezeichnung gewählt.

Die Herstellung der Brandschutzfasern wird in nachfolgenden Beispielen erläutert:

Beispiel 1

In einem Turbulenzmischer werden 100 Gewichtsteile Holzfasermischung mit einer Feuchtigkeit von 60% = 275 Gewichtsteile feucht und anschliessend 200 Gewichtsteile Kalziumhydroxid, $Ca(OH)_2$ gegeben und circa 1–2 Minuten gemischt und homogenisiert.

Danach werden 144 Gewichtsteile $H_3PO_4$ (100%ig), also zum Beispiel 288 g $H_3PO_4$, 50%ig bei laufendem Mischer eingedüst. Die Eindüsungszeit beträgt ca. 5 Minuten, der Umsetzungsvorgang ist exotherm. Nach Ablassen der Brandschutzfasern aus dem Mischer lässt man sie einige Minuten ausreifen und abdampfen. Die Faser ist nun im verarbeitungsfähigen Zustand und wird direkt zur Mischung mit dem Zement nach dem üblichen Verfahren verwandt.

Soll eine trockene Faser erzeugt werden, so wird das Produkt auf den gewünschten Trockengrad nachgetrocknet, was zum Beispiel in einem Fliessbetttrockner geschehen kann. Im trockenen Zustand können die Fasern nachbehandelt und sortiert werden.

Der Zusatz von Additiven als Abbinde-Beschleuniger oder Abbinde-Verzögerer zur Hydrophobierung oder zur Färbung kann sowohl im feuchten als auch im trockenen Zustand erfolgen.

Beispiel 2

110 Gewichtsteile atro Restabwasserklärschlamm einer Feinpapierfabrik mit der von der Entwässerung stammenden Restfeuchte von 60 Gew.-%, also 314 Gewichtsteile feucht und 200 Gewichtsteile Kalziumhydroxid werden in einem Turbulenzmischer gemischt und homogenisiert. Anschliessend werden 208 Gewichtsteile einer 69%igen Phosphorsäure eingedüst und es wird wie bei Beispiel 1 weiter verfahren.

Beispiel 3

165 Gewichtsteile feingemahlener Holz- oder Zellstoffasern mit einer Feuchte von 15 Gewichtsteilen werden in einen Turbulenzmischer eingegeben und mit 200 Gewichtsteilen Kalziumcarbonat innig vermischt. Anschliessend werden 416 Gewichtsteile einer 34%igen Phosphorsäure zugedüst und es wird wie in Beispiel 1 weiter verfahren.

## Patentansprüche

1. Verfahren zum Herstellen eines insbesondere bei der Anwendung von im Bauwesen verwendeten, anorganischen Bindemitteln, und zwar sowohl Luftbindemitteln, wie auch hydraulischen Bindemitteln als Verstärkungs- und/oder Versteifungswerkstoff einsetzbaren Faserwerkstoffs, gekennzeichnet durch die innige nasse Vermengung von organischen Fasern – pflanzliche oder tierische Fasern, wie auch organische Chemiefasern, insbesondere Fasern, die den fasrigen Bestandteilen von Klärschlämmen entstammen – mit Ausgangschemikalien, die unter der folgenden Zugabe von Phosphorsäure (Orthophosphorsäure) tertiäre Phosphate bilden, so dass die Fasern des sich so ergebenden Endprodukts von diesen tertiären Phosphaten umhüllt sind.

2. Verfahren nach Anspruch 1, dadurch gekennzeichnet, dass die Phosphate aus Phosphorsäure (Orthophosphorsäure) und Metallhydroxiden, Metallhydrogencarbonaten und Metallcarbonaten gebildet sind.

3. Verfahren nach Anspruch 2, dadurch gekennzeichnet, dass die Phosphate die Salze von Phosphorsäure (Orthophosphorsäure) und insbesondere der Metallhydroxide von Calcium ($Ca(OH)_2$), Magnesium ($Mg(OH)_2$) und Aluminium ($Al(OH)_3$) sind.

4. Verfahren nach Anspruch 1, dadurch gekennzeichnet, dass die Phosphorsäure (Orthophosphorsäure) im stöchiometrischen Verhältnis zu den Ausgangsmineralien zugegeben wird.

5. Verfahren nach Anspruch 1, dadurch gekennzeichnet, dass die Fasern verholzte pflanzliche Fasern, Holz- und/oder Zellulosefasern sind.

6. Verfahren nach Anspruch 1, dadurch gekennzeichnet, dass die Fasern die faserigen Restbestandteile von Klärschlämmen aus Papierfabriken sind.

## Revendications

1. Procédé de fabrication d'un matériau fibreux utilisable comme matériau de renforcement et/ou de raidissement, en particulier lors de l'application de liants minéraux utilisés dans le bâtiment, à savoir aussi bien de liants aériens que de liants hydrauliques, caractérisé par le mélange intime à l'état humide de fibres organiques – fibres végétales ou animales ainsi que fibres chimiques organiques, en particulier fibres qui proviennent des constituants fibreux de boues d'épuration – à des produits chimiques de départ qui, lorsqu'on ajoute ensuite de l'acide phosphorique (acide orthophosphorique), forment des phosphates tertiaires de sorte que les fibres du produit final qui en résultent sont enrobées de ces phosphates tertiaires.

2. Procédé selon la revendication 1, caractérisé en ce que les phosphates sont formés en partant d'acide phosphorique (acide orthophosphorique) et d'hydroxydes métalliques, d'hydrogénocarbonates métalliques et de carbonates métalliques.

3. Procédé selon la revendication 2, caractérisé en ce que les phosphates sont les sels de l'acide phosphorique (acide orthophosphorique) et, en particulier, des hydroxydes métalliques de calcium ($Ca(OH)_2$), de magnésium ($mg(OH)_2$) et d'aluminium ($Al(OH)_3$).

4. Procédé selon la revendication 1, caractérisé en ce que l'on ajoute l'acide phosphorique (acide orthophosphorique) en proportion stoechiométrique relativement aux minéraux de départ.

5. Procédé selon la revendication 1, caractérisé en ce que les fibres sont des fibres végétales lignifiées, des fibres de bois et/ou de cellulose.

6. Procédé selon la revendication 1, caractérisé en ce que les fibres sont les constituants résiduaires fibreux de boues d'épuration provenant de fabriques de papier.

## Claims

1. A process for the production of fibrous material usable as a reinforcement and/or stiffening

material, particularly when using inorganic binders used in the building industry, namely both binders settable in air and under water, characterized by intimate mixing, in wet conditions, of organic fibres, such as vegetable and animal fibres and also organic chemical fibres, particularly fibres originating from the fibrous components of sludges, with initial chemicals which, when phosphoric acid (orthophosphoric acid) is added to them, form tertiary phosphates so that the fibres of the end product made in this way are coated by these tertiary phosphates.

2. A process according to Claim 1 characterized in that the phosphates are obtained from phosphoric acid (orthophosphoric acid), and hydroxides of metals, hydrocarbons or metals and carbonates of metals are formed.

3. A process according to Claim 2 characterized in that the phosphates are salts of phosphoric acid (orthophosphoric acid) and are particularly hydroxides of calcium ($Ca(OH)_2$), magnesium ($Mg(OH)_2$) and aluminium ($Al(OH)_3$).

4. A process according to Claim 1 characterized in that the phosphoric acid (orthophosphoric acid) is added to the initial materials in a stoichiometric ratio.

5. A process according to Claim 1 characterized in that the fibres are lignified vegetable fibres, wood fibres and/or cellulose fibres.

6. A process according to Claim 1 characterized in that the fibres are fibrous residual components of sludges of paper mills.